**Europäisches Patentamt**

**European Patent Office**

**Office européen des brevets**

(19)

(11) Numéro de publication : **0 313 633 B1**

(12)

# FASCICULE DE BREVET EUROPEEN

(45) Date de publication du fascicule du brevet :
**12.08.92 Bulletin 92/33**

(51) Int. Cl.$^5$ : **B01D 61/00,** C02F 9/00,
C02F 1/48, C02F 1/34,
B01J 43/00

(21) Numéro de dépôt : **88904556.3**

(22) Date de dépôt : **13.05.88**

(86) Numéro de dépôt international :
**PCT/FR88/00244**

(87) Numéro de publication internationale :
**WO 88/08737 17.11.88 Gazette 88/25**

(54) **PROCEDE ET APPAREIL DE TRAITEMENT DE L'EAU, EAU TRAITEE ANSI OBTENUE ET SON UTILISATION.**

(30) Priorité : **13.05.87 FR 8706732**

(43) Date de publication de la demande :
**03.05.89 Bulletin 89/18**

(45) Mention de la délivrance du brevet :
**12.08.92 Bulletin 92/33**

(84) Etats contractants désignés :
**AT BE CH DE GB IT LI LU NL SE**

(56) Documents cités :
**EP-A- 0 056 855
EP-A- 0 128 233
CH-A- 361 944
DE-A- 2 919 315
FR-A- 2 482 873
GB-A- 2 002 736**

(73) Titulaire : **BANSARD, Claude Marcel Albert
Chateau du Chesnay, Courcemont
F-72110 Bonnetable (FR)**
Titulaire : **MAZINGUE, Michel Roderic
8, rue des Portes-Blanches
F-75018 Paris (FR)**

(72) Inventeur : **BANSARD, Claude Marcel Albert
Chateau du Chesnay, Courcemont
F-72110 Bonnetable (FR)**
Inventeur : **MAZINGUE, Michel Roderic
8, rue des Portes-Blanches
F-75018 Paris (FR)**

(74) Mandataire : **Beauchamps, Georges et al
Cabinet Z.Weinstein 20, avenue de Friedland
F-75008 Paris (FR)**

## Description

La présente invention concerne généralement et a essentiellement pour objet un procédé de traitement physico-chimique continu de l'eau par exemple naturelle ou ordinaire et un appareil pour l'exécution de ce procédé perfectionné ainsi qu'à titre de produit industriel nouveau, l'eau traitée obtenue par ce procédé et son utilisation. L'invention se rapporte aussi aux diverses applications résultant de la mise en oeuvre du procédé et de l'appareil précités ainsi qu'aux systèmes, équipements et installations pourvus de tels appareils.

Dans l'état de la technique antérieure, on connaît déjà différentes méthodes de traitement de l'eau, telles qu'en particulier la purification par osmose inversée, l'épuration par déionisation ou échange d'ions et la dynamisation par ionisation.

Ces trois méthodes, qui ont été utilisées jusqu'à présent isolément ou séparément, offrent chacune divers avantages mais aussi divers inconvénients.

La purification par osmose inversée, qui effectue la diffusion à travers une membrane semi-perméable de l'eau, permet d'obtenir une rétention presque totale des minéraux en suspension et quasiment totale des matières organiques et la structure polymérisée stable de la membrane ainsi que la nature lisse de sa surface en contact avec le filtrat permettent un bon nettoyage de cette membrane. Les avantages, procurés par l'osmose inversée, sont :

La pureté bactériologique de l'eau traitée et la fiabilité relative de ce procédé ;

Le phénomène d'osmose inversée ne nécessite aucun traitement chimique préalable de l'eau, de sorte que les caractéristiques physico-chimiques de celle-ci ne sont pratiquement pas modifiées.

Par contre, l'osmose inversée utilisée isolément présente l'inconvénient de procurer des résultats différents ou variables selon la qualité initiale des eaux traitées, de sorte qu'il est difficile d'adapter ce procédé en vue de l'obtention d'un résultat unique ou constant en fonction des différents filtrats.

Le procédé d'épuration par échange d'ions utilise des résines échangeuses d'ions permettant de réaliser une déminéralisation quasi-totale, donc d'obtenir une eau chimiquement pure. Mais ce procédé, utilisé isolément, présente l'inconvénient du risque de développement bactérien dans les résines, lequel peut être dangereux, altère leur efficacité et réduit leur durée de vie à une valeur assez faible.

Le procédé dit de dynamisation utilise une méthode et un dispositif vibreur connus par la publication N° 2 482 873 du brevet d'invention français N° 80.11461. Ce procédé consiste à produire, dans l'eau, des chocs mécaniques ou vibrations par un champ électromagnétique oscillant ou alternatif s'ajoutant au champ magnétique existant entre le noyau de l'électro-aimant générateur de vibrations et la carcasse formant circuit magnétique de cet électro-aimant. Il en résulte une action sur les différentes formes chimiques possibles de l'eau, laquelle action est décelable au faisceau laser par effet RAMAN.

La présente invention a principalement pour but de supprimer les inconvénients précités tout en conservant les avantages précités et, ce, par une combinaison nouvelle de moyens dont certains sont connus séparément en soi mais dont la coopération ou l'interaction produit un résultat d'ensemble commun.

A cet effet, le procédé conforme à l'invention, qui est du type consistant à purifier l'eau par osmose inversée, est caractérisé en ce qu'il consiste successivement à compléter la déminéralisation obtenue par osmose inversée en épurant l'eau par échange d'ions puis à enrichir cette eau épurée en ions négatifs en la soumettant à des vibrations mécaniques produites par un champ électromagnétique oscillant et de préférence en y incorporant des ions de métaux.

Selon une autre caractéristique de l'invention, l'épuration par échange d'ions est effectuée par déionisation anionique et/ou cationique avec mélange des effluents déionisés respectifs et éventuellement recyclage de celui-ci.

Suivant encore une autre caractéristique de l'invention, on contrôle la qualité notamment physiologique de l'eau traitée en effectuant des mesures combinées en particulier de résistivité ou de conductance électrique et du potentiel d'hydrogène avec de préférence rétroaction pour régulation automatique des rapports de mélange eau purifiée/eau déminéralisée/acide/alcalin/eau dynamisée.

L'invention vise aussi un appareil pour l'exécution du procédé précité, qui est du type à dispositif purificateur à osmose inversée et est caractérisé en ce qu'il comporte successivement, montés en série dans le sens d'écoulement de l'eau à traiter et en aval dudit dispositif purificateur : un dispositif déioniseur à résines échangeuses d'ions, un dispositif d'ionisation et de préférence un dispositif de contrôle de qualité d'eau traitée.

Selon une autre caractéristique de l'invention, le dispositif d'ionisation précité se compose d'un organe aquavibrateur amont et d'un organe aval d'ionisation sur métaux, reliés en série.

Suivant encore une autre caractéristique de l'invention, le dispositif déioniseur précité est à au moins deux lits séparés respectivement de résine acide ou cationique et de résine basique ou anionique alimentés séparément l'un ou l'autre ou simultanément en eau purifiée en ayant leurs entrées reliées respectivement à deux voies de passage d'un distributeur à trois voies dont la troisième est reliée en dérivation aux sorties respectives des deux lits d'une part et à l'entrée du dispositif d'ionisation d'autre part.

L'invention concerne également le produit industriel nouveau constitué par l'eau traitée obtenu par le procédé précité. L'eau traitée formant ce produit est caractérisée notamment par un potentiel énergétique accru et une augmentation de ses liaisons hydrogène ainsi que par la présence temporaire de différents polymères instables d'existence fugace accrus en nombre.

L'invention vise enfin une utilisation du produit constitué par l'eau traitée précitée, qui est caractérisée par son application à la santé humaine et animale, à des cultures agro-biologiques et agricoles et notamment à l'activation de la croissance bactérienne et à l'accélération de la pousse de végétaux.

L'invention produit donc un résultat d'ensemble constitué par le produit industriel nouveau représenté par l'eau traitée qui est remarquable notamment par son enrichissement chimique notamment par création continue, dans sa masse, de polymères instables à existence transitoire d'où une qualité physico-chimique considérablement améliorée de cette eau. En particulier, l'inconvénient mentionné du développement bactérien dans les résines échangeuses d'ions est complètement éliminé par la présente invention puisque, dans cette dernière, les résines échangeuses d'ions reçoivent une eau déjà fortement déminéralisée, d'où une augmentation considérable de la durée de vie et de l'efficacité de ces résines due surtout à leur emploi avec une eau bactériologiquement purifiée.

Par ailleurs, l'utilisation séparée de résines respectivement anioniques et cationiques en deux lits distincts permet également une amélioration substantielle par rapport au système classique à lit mélangé, cette amélioration consistant en le choix possible des proportions d'eau à traiter par chacune d'elles et, en conséquence, un dosage possible avec l'eau osmosée, c'est-à-dire la possibilité d'un mélange étudié entre l'eau purifiée, l'eau passée sur résine anionique et l'eau passée sur résine cationique. Ce système présente l'avantage de mettre en évidence la capacité de chacune des deux résines respectivement anionique et cationique, en fonction de la balance initiale, de régulariser le potentiel d'hydrogène pH par dosage du rapport anion/cation. Une variante de réalisation pourrait cependant consister en un système de résine à lits mélangés pour une utilisation à potentiel d'hydrogène constant.

On obtient ainsi une eau totalement contrôlée tant en valeur physico-chimique que bactériologique dont les différentes liaisons hydrogène sont enrichies en énergie avec création continue de différents polymères de l'eau, d'une durée de vie très courte, de l'ordre d'une picoseconde mais dont la création continue confère une nature nouvelle à l'eau. Cette mutation est d'autant plus importante que l'eau est plus pure et plus stable en potentiel d'hydrogène, ce que permet précisément la grande efficacité de la présente invention.

L'eau se trouve ainsi enrichie en liaisons par la présence des sept formes actuellement connues de cette eau : monomère, dimère, trimère, tétramère, pentamère, avec des ions $H^+$ et $OH^-$. Cette richesse en liaisons ne se rencontre dans la nature que dans les cas très rares d'eau naturelle et l'effet technique de l'invention, sur tout type d'eau connu est la création de cet ensemble instable mais constamment renouvelé de monomères et de polymères.

L'invention sera mieux comprise et d'autres buts, caractéristiques, détails et avantages de celle-ci apparaîtront plus clairement à la lecture de la description explicative qui va suivre en se reportant aux dessins schématiques annexés, donnés uniquement à titre d'exemple non limitatif illustrant un mode de réalisation spécifique actuellement préféré de l'invention et dans lesquels ;

La figure 1 représente un schéma synoptique fonctionnel de l'appareil conforme à l'invention ;

La figure 2 est un diagramme représentant graphiquement la variation de l'intensité I de l'effet RAMAN-LASER (nombre de photons de fréquence différentielle par unité de temps), portée en ordonnées, en fonction du nombre d'ondes par centimètre 1/ϕ (portée en abscisses) pour une eau ordinaire ;

La figure 3 est une vue semblable à la figure 2 mais concernant une eau traitée conformément à l'invention ;

La figure 4 représente graphiquement des diagrammes relatifs à la croissance d'une culture bactérienne lactique en boîte de Pétri traitée respectivement par de l'eau distillée, par de l'eau osmosée et par de l'eau selon l'invention, ce graphique montrant la variation du dénombrement N (nombre de bactéries par unité de volume, porté en ordonnées) en fonction du temps t porté en abscisses ; et

La figure 5 représente graphiquement des diagrammes concernant la pousse d'un maïs sélectionné traité respectivement par de l'eau distillée, par de l'eau osmosée et par de l'eau conforme à l'invention et montrant la variation de la hauteur de pousse H (portée en ordonnées) en fonction du temps de croissance t (porté en abscisses).

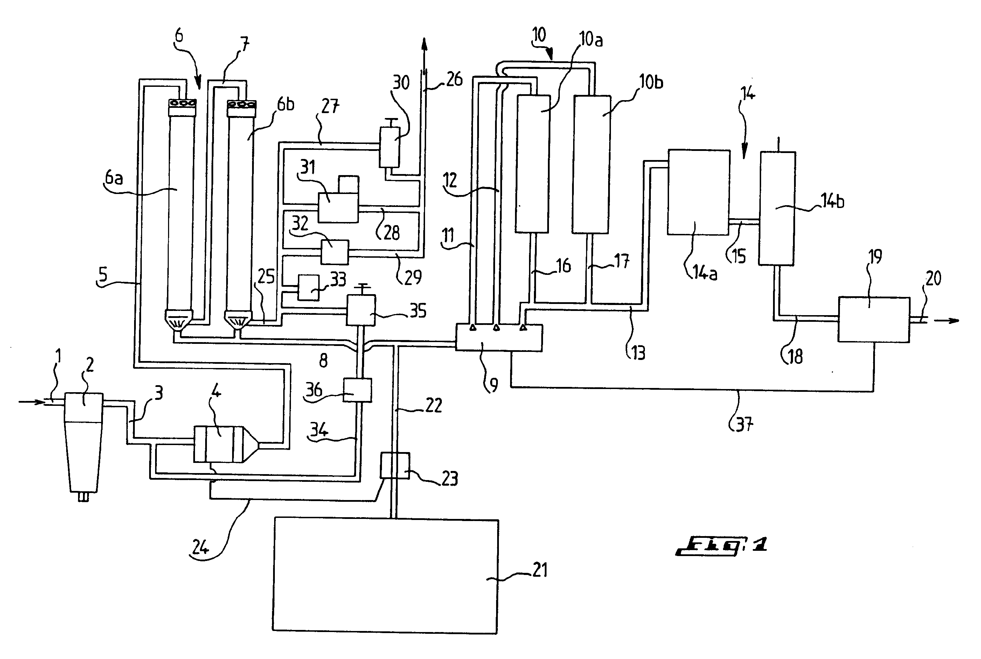

Selon l'exemple de réalisation représenté sur la figure 1, l'appareil conforme à l'invention comprend successivement une conduite 1 d'arrivée d'eau, notamment brute à traiter aboutissant à l'entrée d'un dispositif de préfiltration 2 dont la sortie est reliée par une conduite 3 au côté aspiration d'une pompe de mise en pression 4 dont le côté refoulement est relié par une conduite 5 à l'entrée d'un dispositif purificateur à osmose inversée 6 constitué ici par deux éléments ou cartouches individuels à osmose inversée 6a et 6b reliés en série par une conduite de liaison 7 raccordant la sortie de l'élément 6a à l'entrée de l'élément 6b.

Les sorties respectives des deux éléments 6a, 6b sont reliées en dérivation à une conduite commune 8 aboutissant à l'entrée d'un distributeur à trois voies 9. Ce distributeur est relié à un dispositif déioniseur 10 à deux lits séparés respectivement de résines anioniques 10a et de résines cationiques 10b. La première voie du distributeur 9 est reliée par une conduite 11 à l'entrée de l'élément déioniseur anionique 10a tandis que la deuxième voie du distributeur est reliée par une conduite 12 à l'entrée de l'élément déioniseur 10b. La troisième voie du distributeur 9 est reliée par une conduite 13 à l'entrée du dispositif d'ionisation 14 notamment du genre révélé dans la publication N° 2 482 873 du brevet d'invention français N° 80.11461 et se composant d'un organe vibreur amont 14a et d'un organe aval d'ionisation sur métaux 14b, la sortie du premier étant reliée à l'entrée du second par une conduite de liaison 15.

Les sorties respectives des deux éléments déioniseurs 10a et 10b sont branchées en dérivation par des conduites 16 et 17 sur la conduite 13 de liaison entre le distributeur 9 et le dynamiseur 14. La sortie du dynamiseur 14, c'est-à-dire du dispositif d'ionisation sur métaux 14b, est reliée par une conduite 18 à une unité 16 de contrôle de qualité finale de l'eau traitée, laquelle en sort par la conduite 20.

Un bac ou réservoir d'eau osmosée 21 est branché par une conduite 22 sur la conduite 8 de collecte d'eau osmosée provenant du dispositif d'osmose inversée, par l'intermédiaire d'un organe de contrôle ou de réglage de pression 23 qui est connecté par une ligne de contrôle de pression 24 au système de commande de la pompe 4 en créant ainsi, par rétroaction, un asservissement de cette pompe à l'organe contrôleur de pression 23.

La sortie du dispositif d'osmose inversée 6 et en particulier de l'élément 6b est reliée par une conduite 25 à une conduite de rejet 23 par l'intermédiaire de trois canalisations en dérivation respectivement 27, 28, 29 dans lesquelles sont respectivement montés une vanne de rejet 30, un purgeur automatique 31 et un purgeur à commande manuelle 32. Sur la conduite 25 est également branché en dérivation un témoin de pression 33. Une conduite de recyclage 34 comportant une vanne de recyclage 35 et une soupape de retenue ou un clapet anti-retour 36 est branchée en dérivation entre la conduite 25 et la conduite 3 (entre le filtre 2 et la pompe 4).

Les organes 30, 31, 32, 33, 35 et 36 et leurs canalisations associées permettent d'effectuer le cycle de nettoyage des membranes semi-perméables du dispositif à osmose inversée 6 tandis que le système restant constitue le circuit de traitement d'eau.

En cas de surpression dans ce circuit et notamment dans la conduite 8, l'organe contrôleur de pression formant également vanne, d'une part, ouvre la communication 22 entre la conduite 8 et le bac ou réservoir 21 pour permettre une décharge d'eau dans ce dernier afin de réduire la pression et, d'autre part, agit sur le système de commande de la pompe 4 pour ralentir celle-ci afin d'abaisser la pression de refoulement.

L'unité de contrôle 19 est reliée par une ligne de connexion 37 au système de commande ou d'actionnement du distributeur 9 de façon à régler le dosage de mélange des eaux déionisés sortant respectivement des éléments 10a et 10b du dispositif déioniseur 10. Le distributeur à trois voies 9 permet notamment l'alimentation séparée des deux éléments 10a et 10b, soit simultanément selon des débits sélectivement variables ou seulement l'un ou l'autre d'entre eux. En outre, une partie des eaux déionisées, sortant respectivement de ces éléments 10a et 10b, est ramenée dans le distributeur 9 pour s'y mélanger avec l'eau osmosée arrivant par la conduite 8, ce mélange ressortant par les conduites 11 et 12.

La pompe 4 permet de prérégler le débit notamment journalier d'eau à purifier. Dans des petites installations, la pompe 4 est supprimée et le débit peut varier en fonction de la pression initiale de l'arrivée d'eau en provenance soit du robinet de distribution d'eau de ville, soit d'un réservoir d'emmagasinage d'eau sous pression.

Le contrôle possible du rejet permet de régler le débit de rejet notamment quotidien donc la quantité d'eau nécessairement rejetée pour le nettoyage de la membrane afin de limiter au maximum la consommation d'eau.

L'unité de contrôle 19 permet notamment la mesure de la résistivité ou conductance électrique de l'eau traitée, exprimée en microsiemens par centimètre carré et par centimètre. Cette mesure est effectuée par deux électrodes plongeant dans l'eau traitée sur le tuyau d'écoulement à l'abri de l'air et de la lumière pour permettre une lecture plus précise des résultats de mesure. Le calcul de la conductivité s'effectue dans un boîtier annexe avec affichage numérique notamment par diodes électroluminescentes. Les indications se situent dans deux domaines ou plages de valeurs respectivement de 0 à 200 $\mu$ S et de 200 $\mu$ S à 2000 $\mu$ S. L'unité de contrôle détermine également la valeur de potentiel d'hydrogène pH exprimée en millivolts, par échange du potentiel électronique sur une fine membrane de verre de forme sphérique, chargée, à l'intérieur, d'une solution saturée de chlorure de potassium. Le résultat, obtenu par intégration, est lisible sur un cadran à affichage numérique notamment par diodes électroluminescentes. Cette mesure donc sa lecture ne peut, pour des raisons de polarisation de la sonde, se faire de façon continue car il est nécessaire de nettoyer la sonde entre deux mesures consécutives. En fonction ces deux lectures de mesures, il est possible d'influer sur le traitement de l'eau en dosant les rapports entre les quantités respectivement d'eau purifiée, d'eau déminéralisée, d'acide alcalin et d'eau dynamisée.

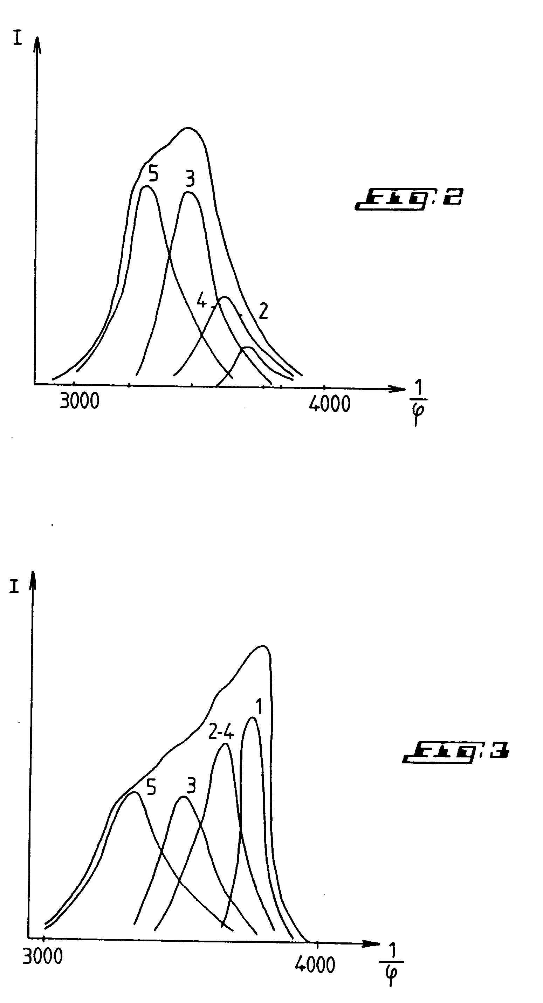

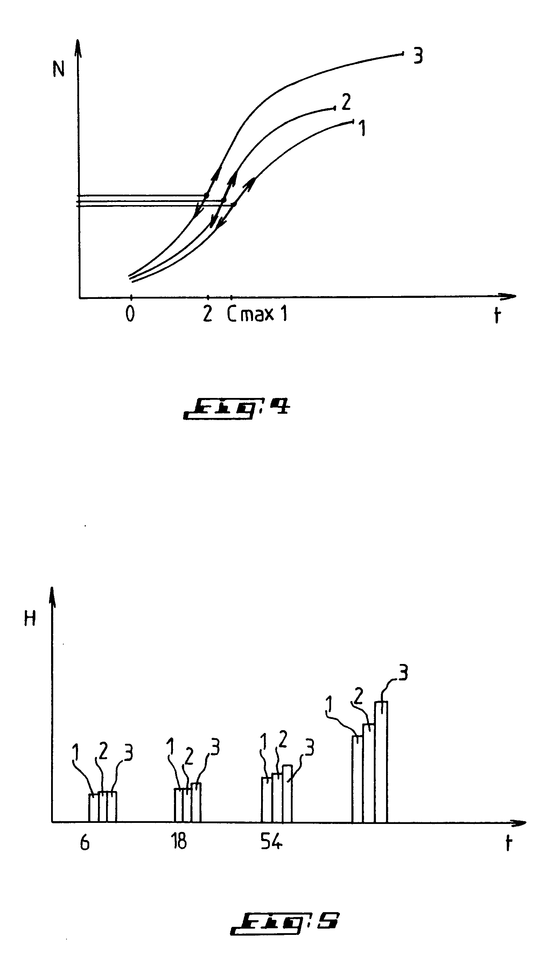

Les figures 2 et 3, permettent de comparer l'eau traitée conformément à l'invention (selon la figure 3) à une eau ordinaire (selon la figure 2). Cette comparaison est essentiellement basée sur l'utilisation de l'effet RAMAN qui se définit par un phénomène de changement de longueur d'onde d'un rayon monochromatique de lumière cohérente tel qu'un faisceau laser à travers un milieu naturel ou une structure moléculaire. L'analyse consiste en l'étude des radiations provenant du passage de ce rayon à travers l'élément à étudier. Le rayon excitateur émet, avec une certaine intensité, des photons qui, au passage de l'élément à étudier, sont soit réfléchis ou absorbés par la matière ou bien diffusés par celle-ci. Ces photons diffusés sont, d'une part, de même fréquence que le faisceau laser excitateur et, d'autre part, pour une partie d'environ un millième, d'une fréquence différente. Ce sont ces derniers photons qui traduisent l'effet RAMAN dont la caractéristique est cet écart de fréquence.

Sur les figures 2 et 3, l'intensité précitée 1, c'est-à-dire le nombre de photons par unité de temps, est portée en ordonnées tandis que le nombre d'ondes par centimètre (1/φ) est porté en abscisses. Les figures 2 et 3 représentent la décomposition du spectre RAMAN-LASER se traduisant par le tracé de plusieurs courbes. La courbe 1 représente le monomère $H_2O$ de l'eau liquide et les courbes 2, 3, 4, 5 représentent respectivement le dimère, le trimère, le tétramère et le pentamère de l'eau. La comparaison entre les figures 2 et 3 fait nettement ressortir le renforcement des liaisons hydrogène et un accroissement du nombre des polymères donc un enrichissement de l'eau traitée qui est notamment renforcée en monomère $H_2O$.

La figure 4 représente une comparaison de l'effet de différentes eaux sur la croissance d'une culture bactérienne lactique en boîte de Pétri. Sur ce graphique, le dénombrement N, c'est-à-dire le nombre de bactéries par unité de volume, est porté en ordonnées tandis que le temps t est porté en abscisses. Ce diagramme comporte trois courbes numérotées respectivement 1, 2 et 3 et représentant l'effet respectivement de l'eau distillée, de l'eau osmosée et de l'eau traitée selon l'invention. On a indiqué, sur l'axe des abscisses, le point $C_{max}$ représentant la croissance maximale par unité de temps ou la vitesse maximale de croissance en particulier pour l'eau distillée.

On constate, d'après ces diagrammes, que l'invention permet d'obtenir un accroissement considérable de la productivité des produits laitiers.

La figure 5 illustre l'action respective des trois eaux précitées respectivement distillée 1, osmosée 2 et traitée selon l'invention 3 sur la pousse de végétaux tel qu'un maïs sélectionné. En ordonnées est portée la hauteur de pousse H tandis que le temps t exprimé en heures h est porté en abscisses.

On constate que la vitesse de pousse du végétal augmente avec le temps dans une proportion de 10% lorsqu'on utilise de l'eau osmosée et de 30% lorsqu'on utilise une eau traitée selon l'invention.

## Revendications

1. Procédé de traitement physico-chimique continu de l'eau naturelle ou ordinaire, consistant à purifier l'eau par osmose inversée, caractérisé en ce qu'il consiste successivement à compléter la déminéralisation obtenue par osmose inversée en épurant l'eau par échange d'ions puis à enrichir cette eau épurée en ions négatifs en la soumettant à des vibrations mécaniques produites par un champ électromagnétique oscillant et de préférence en y incorporant des ions de métaux.

2. Procédé selon la revendication 1, caractérisé en ce que l'épuration par échange d'ions est effectuée par déionisation anionique et/ou cationique avec mélange des effluents déionisés respectifs et éventuellement recyclage de celui-ci.

3. Procédé selon la revendication 1 ou 2, caractérisé par un contrôle de la qualité notamment physiologique de l'eau traitée, par mesures combinées en particulier de résistivité ou de conductance électrique et du potentiel d'hydrogène avec de préférence rétroaction pour régulation automatique des rapports de mélange eau purifiée/eau déminéralisée/acide/alcalin/eau dynamisée.

4. Appareil pour l'exécution du procédé selon l'une des revendications précédentes, comportant un dispositif purificateur à osmose inversée (6), caractérisé en ce qu'il comporte successivement, montés en série dans le sens d'écoulement de l'eau à traiter et en aval dudit dispositif purificateur (6) : un dispositif déioniseur (10) à résines échangeuses d'ions, un dispositif d'ionisation (14) et de préférence un dispositif (19) de contrôle de qualité d'eau traitée.

5. Appareil selon la revendication 4, caractérisé en ce que le dispositif d'ionisation (14) se compose d'un organe aquavibrateur amont (14a) et d'un organe aval d'ionisation sur métaux (14b) reliés en série.

6. Appareil selon la revendication 4 ou 5, caractérisé en ce que le dispositif déioniseur précité (10) est à au moins deux lits séparés (10a, 10b) respectivement de résine acide ou cationique et de résine basique ou anionique, alimentés séparément l'un ou l'autre ou simultanément en eau purifiée en ayant leurs entrées reliées respectivement à deux voies de passage d'un distributeur à trois voies (9) dont la troisième est reliée en dérivation aux sorties respectives des deux lits (10a, 10b) d'une part et à l'entrée du dispositif d'ionisation négative (14) d'autre part.

7. Produit, caractérisé en ce qu'il est obtenu par le procédé selon l'une des revendications 1 à 3.

8. Produit selon la revendication 7, caractérisé par un potentiel énergétique accru et une augmentation de ses liaisons hydrogène ainsi que par la présence temporaire de différents polymères instables d'existence fugace, accrus en nombre.

9. Utilisation du produit selon la revendication 7 ou 8, caractérisée par son application à la santé humaine et animale, à des cultures agro-biologiques et agricoles et notamment à l'activation de la croissance bactérienne et à l'accélération de la pousse de végétaux.

**Patentansprüche**

1. Verfahren zur fortlaufenden physikalischen-chemischen Behandlung des Natur-bzw Normalwassers, bestehend in der Reinigung des Wassers durch Umkehrosmose, dadurch gekennzeichnet, dass es darin besteht, aufeinanderfolgend die durch Umkehrosmose erzielte Entmineralisierung durch die Reinigung des Wassers durch Ionenaustausch zu ergänzen und dann dieses gereinigte Wasser mit negativen Ionen zu bereichern, indem man es durch ein schwingendes elektromagnetisches Feld erzeugten mechanischen Schwingungen unterwirft und vorzugsweise indem man Ionen von Metallen dort zusetzt.

2. Verfahren nach Anspruch 1, dadurch gekennzeichnet, dass die Reinigung durch Ionenaustausch durch anionische und/ oder kationische Entionisierung mit Gemisch der jeweiligen entionisierten Abwässer und gegebenenfalls Rückführung desselben durchgeführt wird.

3. Verfahren nach Anspruch 1 oder 2, gekennzeichnet durch eine Kontrolle der insbesondere physiologischen Quälitat des behandelten Wassers durch kombinierte Messungen insbesondere der Resistivität oder der elektrischen Leitfähigkeit und des Wasserstoffpotentials vorzugsweise mit Rückwirkung für die selbsttätige Regelung der Verhältnisse der gereinigte Wasser/entmineralisiertes Wasser/Säure/Alkaligehalt/dynamisiertes Wasser-Mischung.

4. Apparat zur Durchführung des Verfahrens nach einem der vorangehenden Ansprüche, mit einer Reinigungsvorrichtung mit Umkehrosmose (6), dadurch gekennzeichnet dass er aufeinanderfolgend, in Reihenfolge in der Strömungsrichtung des zu behandelnden Wassers und stromabwärts der besagten Reinigungsvorrichtung (6) angeordnet : eine Entionisierungsvorrichtung (10) mit Ionen austauschenden Harzen, eine Ionisierungsvorrichtung (14) und vorzugsweise eine Vorrichtung (19) zur Kontrolle der Quälitat des behandelten Wassers aufweist.

5. Apparat nach Anspruch 4, dadurch gekennzeichnet, dass die Ionisierungsvorrichtung (14) aus einem oberstromigen Aquavibratorglied (14a) und einem unterstromigen Glied zur Ionisierung auf Metallen (14b), die in Reihe verbunden sind, besteht.

6. Apparat nach Anspruch 4 oder 5, dadurch gekennzeichnet, dass die vorgenannte Entionisierungsvorrichtung (10) wenigstens zwei getrennte Betten (10a, 10b) jeweils mit sauren bzw. kationischen Harz und basischen bzw. anionischen Harz aufweist, die voneinander getrennt oder gleichzeitig mit gereinigtem Wasser gespeist werden, wobei deren Eintritte jeweils mit zwei Durchgangswege eines Dreiwegverteilers (9) verbunden sind, dessen dritter Weg in ableitungsweise mit den jeweiligen Austritten der beiden Betten (10a, 10b) einerseits und mit dem Eintritt der Vorrichtung (14) zur negativen Ionisierung andererseits verbunden ist.

7. Erzeugnis, dadurch gekennzeichnet, dass es durch das Verfahren gemäss einem der Ansprüche 1 bis 3 erhalten wird.

8. Erzeugnis nach Anspruch 7, gekennzeichnet durch ein gesteigertes Energiepotential und eine Zunahme seiner Wasserstoffbrückenbindungen sowie durch das zeitliche Vorhandensein von verschiedenen in der Zahl vergrösserten labilen Polymeren mit flüchtigem Bestand.

9. Verwendung des Erzeugnisses nach Anspruch 7 oder 8, gekennzeichnet durch seine Anwendung an die menschliche und tierische Gesundheit, an landwirtschaftliche-biologische und landwirtschaftliche Zuchten und insbesondere an die Aktivierung des Bakterienwachstums und an die Beschleunigung des Pflanzenwachsens.

**Claims**

1. Method for the continuous physical-chemical treatment of natural or ordinary water consisting in purifying the water by reverse osmosis, characterized in that it consists successively in completing the demineralization obtained by reverse osmosis by purifying the water by ion exchange, then in enriching this purified water with negative ions by subjecting it to mechanical vibrations produced by an oscillating electromagnetic field and preferably by incorporating ions of metals thereinto.

2. Method according to claim 1, characterized in that the purification by ion exchange is effected by anionic and/or cationic deionization with mixing of the respective deionized effluents and possibly recycling thereof.

3. Method according to claim 1 or 2, characterized by a control of the in particular physiological quality of the treated water by combined measurements in particular of resistivity or of electrical conductance and of the hydrogen potential preferably with feedback for an automatic control of the purified water/demineralized water/acid/alkali/dynamized water mixing ratios.

4. Apparatus for carrying out the method according to one of the preceding claims, comprising a reverse osmosis purifying device (6), characterized in that it successively comprises, mounted in series in the direction of flow of the water to be treated and downstream of the said purifying device (6) : a deionizing device (10) with ions exchanging resins, an ionization device (14) and preferably a device (19) for the quality control of the treated water.

5. Apparatus according to claim 4, characterized in that the ionization device (14) is composed of an upstream aquavibrator member (14a) and of a downstream member (14b) for ionization on metals, connected in series.

6. Apparatus according to claim 4 or 5, characterized in that the aforesaid deionizing device (10) has at least two separated beds (10a, 10b) of acid or cationic resin and of basic or anionic resin, respectively, fed separately from each other or simultaneously with purified water while having their inlets connected to two passageways, respectively, of a distributor (9) with three ways the third one of which is connected in branching off relationship to the respective outlets of both beds (10a, 10b) on the one hand and to the inlet of the negative ionization device (14) on the other hand.

7. Product characterized in that it is obtained by the method according to one of claims 1 to 3.

8. Product according to claim 7, characterized by an increased energy potential and an increase of its hydrogen bonds as well as by the temporary presence of different unstable polymers with a fugitive existence whose number is increased.

9. Utilization of the product according to claim 7 or 8, characterized by its application to the human and animal health, to agro-biological and agricultural cultures and in particular to the activation of the bacterial growth and to the acceleration of the plant growth.

Fig. 1

Fig. 2

Fig. 3

N

3

2

1

0          2  Cmax 1                    t

_Fig. 4_

H

1  2  3                1  2  3           1  2  3              1  2  3

6            18            54                        t

_Fig. 5_